# EUROPEAN PATENT APPLICATION

(11) **EP 4 672 120 A1**
(43) Date of publication of application: **31.12.2025**
(21) Application number: 24185536.0
(22) Date of filing: 28.06.2024
(51) Int. Cl.: G06Q 20/38, G06Q 20/40

(54) **CREDENTIAL MANAGEMENT AND USE IN A DISTRIBUTED SYSTEM**

(71) Applicant: Mastercard International Incorporated, Purchase, NY 10577 (US)
(72) Inventor: RADU, Cristian, B-1320 Beauvechain (BE); JOHNSON, Alan, Maldon, CM9 8HW (GB); PATEL, Arpitkumar Bharatkumar, 391410 Vadodara (IN)
(74) Representative: Keltie LLP

(57) **Abstract**

A method of provisioning a credential for a transaction between a payment device of a user and a transaction processing device is described. The method is implemented a third-party server remote from the payment device and the transaction processing device. The method comprises assigning the credential to the transaction and the user and provisioning the credential into the payment device for subsequent retrieval by the payment device. Assigning the credential to the transaction comprises: determining unique identifying information of the user; allocating a first user-identifying portion of the credential to correspond to the unique identifying information; determining a plurality of properties intrinsic to the transaction and encoding the plurality of properties into transaction-identifying information; and allocating a second transaction-identifying portion of the credential to correspond to the transaction-identifying information. The credential is associated with encrypted authentication data that is generated by the payment device during the transaction, and used for subsequent authentication of the transaction by the remote third-party server.

## Description

### Field of Disclosure

The present disclosure relates to data management in a distributed system. In embodiments, the disclosure relates to management of credentials and their use during interactions between entities in the distributed system.

### Background to Disclosure

Data management across distributed systems is complex, particularly when the same data needs to be held at different points in the distributed system to achieve required results, such as local speed of performance. This may apply where a credential needs to be used across a complex distributed system. "Credential" is here considered in a broad sense, as digital data that represents, or contributes to the representation of, a user - a credential may then be used, for example, to determine whether the user can access a digital service.

One specific example of a process where a credential would be used, in the context of digital transactions, such as online and mobile payment transactions is tokenisation. This is a mechanism in which the card number is replaced by another number (i.e., the card is tokenised in the sense that a token is generated corresponding to the card's PAN), which is used in its place in digital transactions. This provides additional security for the payment card and enables digital transactions to be performed efficiently. Such a token can also be referred to as an 'ISO-8583 token' (in view of its role within the ISO8583 standards for directing transaction messaging between merchants, corresponding acquirers, and token service providers).

Digital transactions are increasing in volume, and hence the accompanying tokenisation (and subsequent detokenisation) processing is too. The implementation of tokenisation / detokenisation processing has typically involved issuing a 'fresh' token for each new type of transaction channel (e.g., contactless, in-app digitally secured transaction, e-commerce, etc.) interaction and for each new user device (wallet / digital application in various domestic appliances, etc.). As a result, tokenisation has also typically resulted in the generation of a vast number of tokens to protect the user's PAN when conducting transaction across all of the transaction interactions that can take place. This in turn means that large databases mapping the tokens to the PANs have typically been needed to manage the conversion of token to PAN during downstream processing. Significant storage and processing capabilities (as previously discussed in the Applicant's co-pending application EP 23195827) had therefore become necessary. The operation of systems with such large databases (also referred to as 'token vaults') also increases in difficulty with the corresponding increase in the number of PAN-token mappings that are required.

The above difficulties are compounded by the fact that it is becoming increasingly popular to use tokenisation to protect additional user data (in addition to the card's PAN). The type of tokens that are used are also increasing in variety.

It would be desirable to increase the flexibility of credential management and protection that can be achieved via the use of tokenisation without making fundamental changes that would prevent use of the system by an installed base of computer devices and systems.

### Summary of Disclosure

In a first aspect, the disclosure provides a method of provisioning a credential for a transaction between a payment device of a user and a transaction processing device. The method is implemented a third-party server remote from the payment device and transaction processing device. The method comprises assigning the credential to the transaction and the user by: determining unique identifying information of the user; and allocating a first user-identifying portion of the credential to correspond to the unique identifying information; determining a plurality of properties intrinsic to the transaction and encoding the plurality of properties into transaction-identifying information; and allocating a second transaction-identifying portion of the credential to correspond to the transaction-identifying information. The method also comprises provisioning the credential into the payment device for subsequent retrieval by the payment device. The credential may be associated with transaction data, and specifically with encrypted authentication data that forms part of the transaction data, that is generated by the payment device during the transaction.

This approach has clear benefits in relation to improving the security and flexibility of the transaction processing as a whole. Firstly, the transaction-identifying portion of the credential prevents 'cross-channel contamination' of the credentials - specifically, it prevents a fraudulently obtained credential from being used on a different transaction channel (i.e., one having different intrinsic properties from the transaction for which the credential was assigned) as in such cases the credential (and particularly the transaction-identifying portion thereof) would not match the properties of the transaction. Secondly, the credential nevertheless remains generally straightforward to allocate / assign because it can be encoded based on a set of rules (in particular, a set of rules governing how to encode the plurality of properties intrinsic to the transaction to produce the transaction-identifying information portion of the credential). Finally, the credential will still remain unique to the specific transaction that is being implemented by the specific user, since the first user-identifying portion ties the credential uniquely to the user.

In some implementations, the unique identifying information of the user corresponds to a Payment Account Reference (PAR) that has been mapped to a Primary Account Number (PAN) used for the transaction. This means that the PAN is not mapped directly to the credential, and hence there does not need to be a specific 'token vault' entry maintained securely in a token vault (i.e., a large database that contains mappings of PANs to credentials) since the credential is assigned in a different way and using different information.

In some instances, the plurality of properties intrinsic to the transaction comprises a first property indicative of cryptographic material used, by the remote third-party server, during transaction authentication of the encrypted authentication data. This means that the information in the (transaction-identifying portion of the) credential can be used to determine the appropriate cryptographic material that is to be used by the third-party server when it is carrying out authentication of the transaction by decrypting and processing the encrypted transaction data. This is useful to the third-party server, as well as to other transaction processing entities, when ascertaining the processing that is to be carried out in relation to the authentication data. The subsequent processing can therefore be achieved more easily and efficiently.

Optionally, the first property comprises identifying information regarding (i) a requestor of the credential and (ii) a transaction entity associated with issuance of a payment product used during the transaction. The requestor of the credential may correspond to a digital wallet provider and/or a digital application maintainer. The transaction entity may correspond to the bank or other financial institution which issued the payment product and which maintains the user's payment account from which the transaction is being conducted. The payment product in this instance may correspond to a digitised payment card associated with the payment account, and located in the digital wallet and/or digital application.

Additionally or alternatively, the first property may comprise or correspond to an indication of a cryptographic algorithm used by the payment device during the transaction to encrypt the transaction data.

In some implementations, the plurality of properties comprises a second property indicative of a processing mechanism that will be used by the remote third-party server to process the authentication data. This second property may correspond to or be indicative of a mechanism or `channel' that will be used by the transaction processing device (as well as downstream processing entities such as the acquirer if necessary) to route the authentication data to the remote third-party server. This property may correspond to a BIN (Bank Identification Number) or IIN (Issuer Identification Number) of a payment card product used by the payment device during the transaction.

Optionally, the payment device corresponds to a digital wallet and/or digital application installed on a mobile device of the user.

In some implementations, the plurality of properties comprises at least one third property. The third property may comprise an indication of one or more of the following: a status of the credential; a transaction type; a security level of the payment device; and accessibility to the transaction data by an external entity. The external entity if present would not necessarily form part of the transaction payment scheme network (which the user's payment device, the transaction processing device and the remote third-party server are part of) and may instead correspond to a security or governmental agency. The accessibility by the external entity may involve use of 'KeyEscrow' or other functionality. In some cases, and particularly where the third property comprises an indication of a status of the credential or a security level of the payment device, the encrypted authentication data may include an indication of the third property. This beneficially allows additional information about the credential and the transaction to be retained securely and used as a cross-check during transaction authentication.

In another aspect, the disclosure provides a method of conducting a transaction between a payment device of a user and a transaction processing device. The method comprises: generating, by the payment device, transaction data comprising encrypted authentication data for use in a subsequent transaction authentication by a remote third-party server. The method may further comprise determining, by the payment device, (i) a plurality of properties intrinsic to the transaction and (ii) unique identifying information of the user; and retrieving, by the payment device, a credential assigned to the transaction. The credential encodes or comprises a first user-identifying portion corresponding to the unique identifying information, and a second transaction-identifying portion corresponding to the determined plurality of properties. The method further comprises transmitting, by the payment device and via the transaction processing device, the transaction data and the credential to the remote third-party server for the transaction authentication.

As noted above, this approach has clear benefits in relation to improving the security and flexibility of the transaction processing as a whole. The transaction-identifying portion of the credential prevents 'cross-channel contamination' of the credentials. However, the credential nevertheless remains generally straightforward to allocate / assign because it can make use of a predefined a set of rules governing how to encode the plurality of properties intrinsic to the transaction to produce the transaction-identifying information portion of the credential. Moreover, the credential remains unique to the specific user as a result of the first user-identifying portion.

In some implementations, the plurality of properties comprises a first property indicative of cryptographic material used, by the remote third-party server, during the transaction authentication of the encrypted authentication data.

Optionally, the transaction data further comprises unencrypted data including information indicative of the first property. For example, the information indicative of the first property may correspond to information regarding a requestor of the credential (e.g., a digital wallet or digital application provider) and/or a transaction entity (e.g., a bank or other financial institution) associated with issuance of a payment product that is used during the transaction. The payment product in this instance may correspond to a digitised payment card associated with the payment account, and located in the digital wallet and/or digital application.

In some implementations, the plurality of properties comprises a second property indicative of a processing mechanism used by the remote third-party server to process the authentication data during the transaction authentication. As noted above, beneficially this second property may correspond to or be indicative of a mechanism or 'channel' that will be used by the transaction processing device to route the authentication data to the remote third-party server.

Optionally, generating the encrypted authentication data (by the payment device) comprises encrypting information indicative of at least one of the plurality of properties intrinsic to the transaction. In some cases, the at least one of the plurality of properties encrypted in this manner corresponds to a status of the credential and/or a security level of the payment device. This allows additional information about the credential and the transaction to be retained securely and used as a cross-check at a subsequent time (e.g., during transaction authentication).

In a further aspect, the disclosure provides a system for provisioning a credential for a transaction between a payment device of a user and a transaction processing device. The system comprises one or more processors collectively configured to: assign the credential to the transaction and the user and provision the credential into the payment device for subsequent retrieval and association with encrypted authentication data generated by the payment device during the transaction. More specifically, in order to assign the credential to the transaction, the one or more processors are collectively configured to: determine unique identifying information of the user; allocate a first user-identifying portion of the credential to correspond to the unique identifying information; determine a plurality of properties intrinsic to the transaction and encoding the plurality of properties into transaction-identifying information; and allocate a second transaction-identifying portion of the credential to correspond to the transaction-identifying information.

In a still further aspect, the disclosure provides a payment device for conducting a transaction between a user and a transaction processing device. The payment device comprising one or more processors collectively configured to: generate transaction data comprising encrypted authentication data for use in a subsequent transaction authentication by a remote third-party server; and determine (i) a plurality of properties intrinsic to the transaction and (ii) unique identifying information of the user. The one or more processors are further collectively configured to retrieve a credential assigned to the transaction, and transmit, via the transaction processing device, the transaction data and the credential to the remote third-party server for the transaction authentication. The credential encodes a first user-identifying portion corresponding to the unique identifying information and a second transaction-identifying portion corresponding to the determined plurality of properties.

It will be appreciated that similar benefits and advantages will be associated with the systems and devices implementing these methods as were described previously in association with the methods. In addition, corresponding additional (optional) features set out in respect of the above-described methods would also be equally applicable in respect of the respective systems and devices.

For example, the unique identifying information of the user may correspond to a Payment Account Reference (PAR) that has been mapped to a Primary Account Number (PAN) used for the transaction.

In some instances, the plurality of properties intrinsic to the transaction comprises a first property indicative of cryptographic material used, by the remote third-party server, during transaction authentication of the encrypted authentication data.

Optionally, the first property comprises identifying information regarding (i) a requestor of the credential and (ii) a transaction entity associated with issuance of a payment product used during the transaction. The requestor of the credential may correspond to a digital wallet provider and/or a digital application maintainer. The payment product in this instance may correspond to a digitised payment card associated with the payment account, and located in the digital wallet and/or digital application. The payment device may therefore correspond to a digital wallet and/or digital application installed on a mobile device of the user. Additionally or alternatively, the first property may comprise or correspond to an indication of a cryptographic algorithm used by the payment device during the transaction to encrypt the transaction data.

In some implementations, the plurality of properties comprises a second property indicative of a processing mechanism that will be used by the remote third-party server to process the authentication data. This second property may correspond to or be indicative of a mechanism or 'channel' that will be used by the transaction processing device (as well as downstream processing entities such as the acquirer if necessary) to route the authentication data to the remote third-party server.

Optionally, the plurality of properties comprises at least one third property. The third property may comprise an indication of one or more of the following: a status of the credential; a transaction type; a security level of the payment device; and accessibility to the transaction data by an external entity. The accessibility by the external entity may involve use of 'KeyEscrow' or other functionality. In some cases, and particularly where the third property comprises an indication of a status of the credential or a security level of the payment device, the encrypted authentication data may also include an indication of the third property.

In some implementations, the plurality of properties comprises a first property indicative of cryptographic material used, by the remote third-party server, during the transaction authentication of the encrypted authentication data.

Optionally, the transaction data further comprises unencrypted data including information indicative of the first property. This information may, for example, correspond to information regarding a requestor of the credential (e.g., a digital wallet or digital application provider) and/or a transaction entity (e.g., a bank or other financial institution) associated with issuance of a payment product that is used during the transaction. The payment product in this instance may correspond to a digitised payment card associated with the payment account, and located in the digital wallet and/or digital application.

Within the scope of this application it is expressly intended that the various aspects, embodiments, examples or alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Description of Specific Embodiments

Specific embodiments of the disclosure are now described, by way of example, with reference to the accompanying drawings, of which:
**Figure** 1 shows a general approach adopted by elements of the disclosure in addressing technical problems associated with managing and processing user credentials;
**Figure 2** shows schematically a distributed transaction architecture using a four-party model;
**Figure** 3 illustrates elements of a complex distributed system adapted to implement the transaction architecture of Figure 2;
**Figure 4** shows schematically an exemplary system for credential derivation, management and use in the transaction architecture of Figures 2 and 3;
**Figure 5** shows schematically an example configuration of a credential that is generated and used in the system of Figure 4;
**Figure 6** illustrates an exemplary flow for provisioning a credential for use in a transaction by the system of Figure 4; and
**Figure 7** illustrates an exemplary flow for processing a transaction using the credential of Figure 5 in the system of Figure 4.

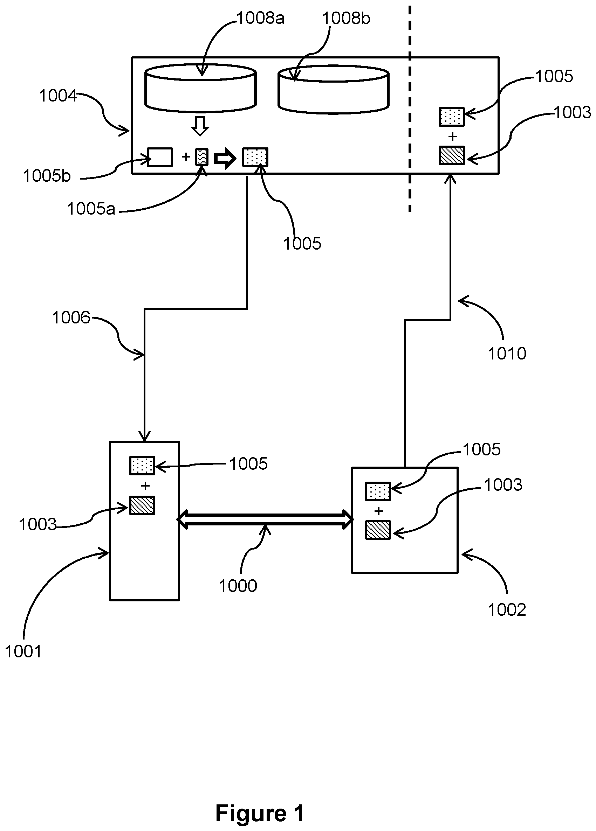

In general terms, the problem addressed by the disclosure and the solution employed by embodiments of the disclosure is illustrated in **Figure 1****.**

A transaction interaction 1000 is carried out between a first (customer) entity and a second (merchant or transaction processing) entity via interaction of first and second devices 1001 and 1002 associated with the two entities respectively. As part of the transaction interaction, transaction data 1003 is generated by the two devices and transmitted to a third-party server 1004 for authentication of the transaction. To aid in the processing and authentication carried out by the third-party server 1004, the transaction data 1003 is transmitted in association with a (user) credential 1005 (which may also be referred to interchangeably hereafter as a 'transaction token').

The credential 1005 comprises two portions: (a) a first user-identifying portion 1005a that is associated with or mapped to identifying information about the customer, such as an identifier of their PAN; and (b) a second transaction-identifying portion 1005b that encodes a plurality of pieces of (channel) information and is associated with properties that are intrinsic to the transaction interaction. This second transaction-identifying portion 1005b may also subsequently be referred to interchangeably as a 'channel token', because the pieces of information encoded therein are associated with and indicate a specific transaction `channel' (mechanism) that would be used for processing the transaction subsequently. The third-party server 1004 can use the information encoded in the transaction-identifying portion 1005b to determine how to process the transaction data 1003 and subsequently authenticate the transaction.

The credential 1005 is provisioned into the first device 1001 in an initial digitisation and provisioning process 1006 that precedes the transaction interaction 1000. This provisioning process 1006 is carried out by the third-party server 1004. During this process, the third-party server 1004 derives the user-identifying portion 1005a, for example by generating a random (unique) reference identifier that is associated with personal transaction information of the customer (e.g., their PAN) that will be used during the interaction 1000. The third-party server 1004 also determines the appropriate properties of the transaction interaction 1000 that will take place subsequently (in other words, the correct pieces of 'channel information') that would be encoded and combined to form part of the transaction-identifying portion 1005b. The credential 1005 is 'generated' (derived) by combining the two portions 1005a, 1005b, and provisioned into the first device 1001. It is noted that as there are multiple different types of transactions that can be carried out (and a variety of combinations of transaction properties associated therewith), multiple such credentials may be generated and provisioned to the first device 1001. Each credential 1005 will therefore be uniquely associated with the user and the specific transaction due to the presence of the user-identifying portion 1005a and the transaction-identifying portion 1005b respectively.

To derive the transaction-identifying portion 1005b, the third-party1004 accesses at least one database 1008a storing the various transaction properties and pieces of channel information. Each entry in the database 1008 corresponds to a particular combination of pieces of channel information that are associated with the properties of a specific transaction interaction. For example, one entry may correspond to the combination of pieces of channel information that are associated with the properties of a contactless 'Apple Pay' transaction conducted by a particular issuer and payment network, whilst another entry may correspond to a contactless 'Google Pay' transaction conducted by a different issuer and/or payment network. If the desired entry does not yet exist in the database 1008, the third-party server 1004 may instead derive the transaction-identifying portion 1005b by encoding the properties of the transaction according to a set of predefined rules and based on accessing one or more further databases 1008b.

During the transaction interaction 1000, the first device 1001 retrieves the credential 1005 representing the combination of properties of the transaction 1000, and associates the credential 1005 with the transaction data 1003 that is generated. This association may involve incorporating some identifying information about the credential, and/or one or more of the plurality of pieces of channel information, into the transaction data 1003. The first device 1001 transmits the credential 1005 and the transaction data 1003 to the second device 1002, which forwards the received information to the third-party server 1004 as part of an authentication request 1010.

Thereafter, the third-party 1004 server can ascertain properties of the transaction 1000 from the credential 1005 and use this information to process the transaction data 1003 appropriately. For example, a subset of intrinsic transaction properties can be derived from the credential 1005 and used to perform initial checks that the requested transaction has corresponding properties.

As a result of the derivation and use of the credential 1005 in the above-described manner, 'cross channel contamination' - where a credential intercepted on one transaction channel by a malicious user is re-used fraudulently on a different transaction channel - can be mitigated, since in such instances the transaction properties encoded in the credential 1005 would not match the properties of the accompanying transaction data 1003. Moreover, the credential 1005 may also be used to convey information that can be used by the third-party server 1004 during substantive authentication of the transaction data 1003. For example, the credential 1005 may encode information indicating appropriate cryptographic material that can be used to decrypt encrypted authentication data included within the transaction data 1003. This simplifies the processing that the third-party1004 needs to carry out during transaction authentication, whilst nevertheless maintaining the security of the transaction.

Some specific implementations will be described in more detail in the context of a transaction scheme. A suitable transaction scheme and infrastructure will first be described in more detail in order to provide a basis for understanding the processing improvements that are provided in this context.

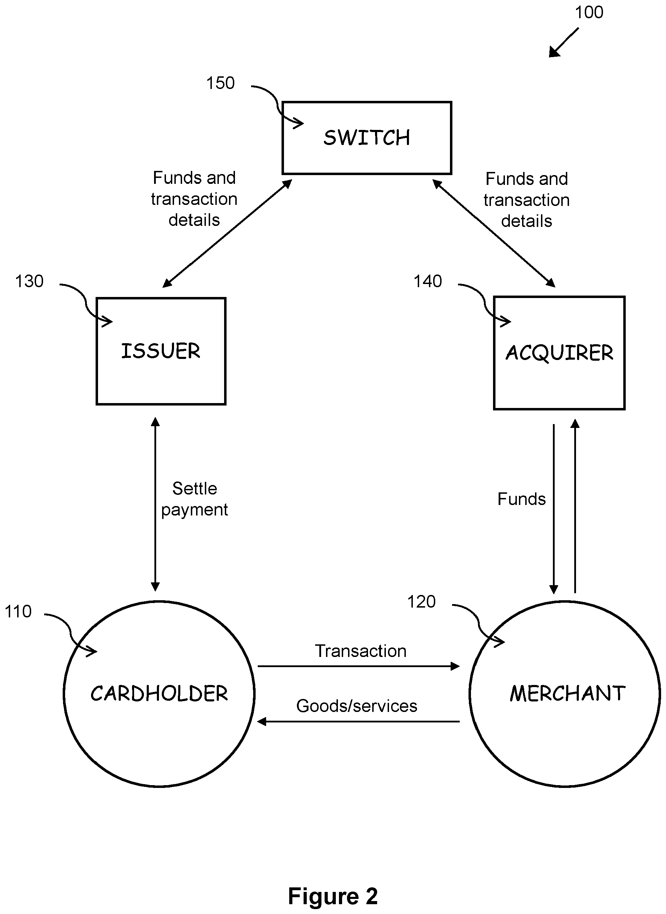

**Figure 2** is a block diagram of a typical four-party model for a payment transaction scheme. The diagram illustrates the entities present in the model and the interactions occurring between entities operating in a card scheme. Normally, card schemes-payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120. The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of a remote transaction). Once the additional verification process is complete the transaction is authorized.

On completion of the transaction between the cardholder 110 and the merchant 120, the transaction details are submitted by the merchant 120 to the acquirer 140 for settlement. The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

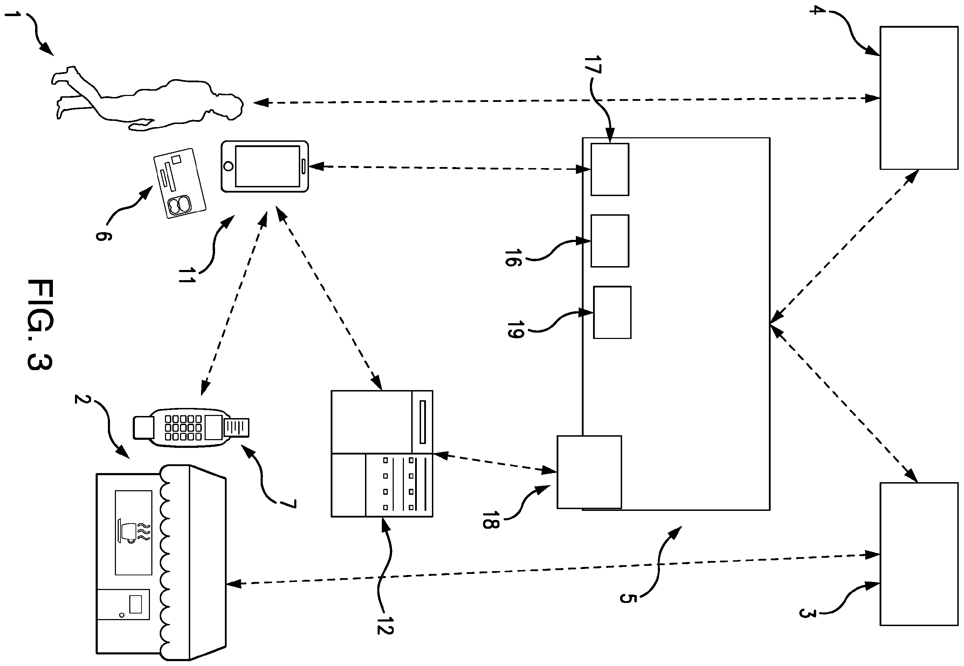

**Figure 3** shows an architecture appropriate for interaction between a cardholder and a merchant. This figure shows a general-purpose architecture for reference, but it shows elements of an architecture used when a cardholder carries out a remote transaction with a merchant server.

For a conventional transaction, a cardholder 1 will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use these to transact with a merchant POS terminal 7 using NFC or another contactless technology, or to make a payment in association with its wallet service as discussed below. Additionally or alternatively, for a remote transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (hereafter simply referred to as 'transaction infrastructure') 5 here provides not only the computing infrastructure necessary to operate the card scheme and provide routing of transactions and other messaging to parties such as the acquirer 3 and the issuer 4, but also a wallet service / server 17 to support a digital wallet on the cardholder computing device; optionally, an internet gateway 18 is also provided to accept internet-based transactions for processing by the transaction infrastructure. This internet gateway 18 may be provided by a payment service provider, and in some arrangements the merchant 2 may interact with an internet gateway rather than directly with the acquirer. In other embodiments, the wallet service / server 17 may be provided similarly by a third-party with an appropriate trust relationship with the transaction scheme provider. To support tokenisation, a token service provider (TSP) 19 is present (again, this is shown as part of transaction infrastructure 5 but may be provided by a third-party with appropriate trust relationships), and the transaction infrastructure 5 provides a digital enablement service 16 to support the performance of tokenized digital transactions, and to interact with other elements of the system to allow transactions to be performed correctly - this digital enablement service may include other elements, such as token service provision.

For a typical tokenised transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

However, the current approach to tokenisation by many transaction schemes brings with it various limitations, not least (as has been indicated earlier) the need for TSPs to maintain a centralised 'token vault' that is used by the TSPs to store mapping between tokens and a user's PAN, and that is accessed during detokenisation and authentication of the transaction.

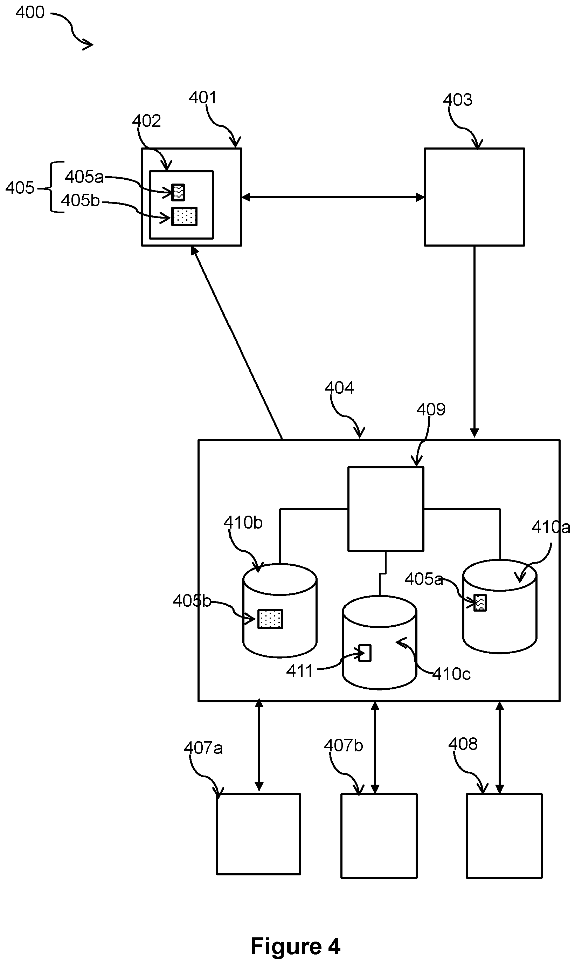

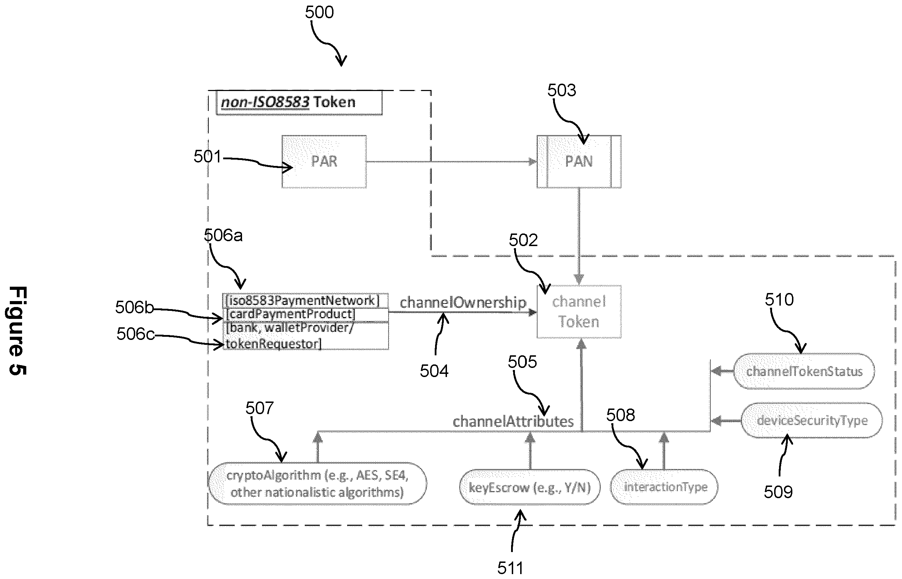

The present Applicants have adopted a different approach to the typical 'tokenisation' that is described above, by utilising instead a (user) credential that is associated with identifying information of the cardholder, as well as with intrinsic properties of the transaction itself. This new approach will now be discussed with reference to Figures 4 and 5.

**Figure 4** illustrates schematically a system 400 for transaction processing and for credential derivation, management and use. This system 400 forms part of the overall transaction infrastructure shown in Figures 2 and 3 and includes components corresponding to those described with reference to those figures. **Figure 5** illustrates an example of a credential 500 that can be generated and used by the system of Figure 4.

The system 400 comprises a user device 401 which is associated with the cardholder 1 (customer) and is used by them to carry out transactions. Referring back to Figure 3, the user device 401 may correspond to the cardholder's physical payment card 6; however, for ease of subsequent reference, the user device 401 in this illustrative example will be considered to correspond to a mobile computing device (such as the smartphone 11) that is adapted for use as a contactless payment device or as a remote (online) payment device. As such, the user device 401 comprises one or more digital applications or digital wallets 402 installed and operating on an operating system (comprising at least one processor and associated memory, not shown) of the mobile device. The system also comprises a merchant device 403 that is configured to interact with the user device 401 to carry out a transaction interaction. For example, again referencing the system of Figure 3, the merchant device 403 may correspond to the merchant POS terminal 7, or may correspond to a digital payment gateway of the merchant 2 used for remote (online) transactions.

The system further comprises a third-party server 404 that provides the functionality of the token service provider (TSP) 19 from Figure 3. As noted previously, the TSP third-party server 404 may form part of the transaction infrastructure 5 (for example, it may be implemented by the switch 150 or another third-party network provider). Alternatively, the TSP (third-party) server 404 may be integrated as functionality within the issuer 4; or may be provided by a completely different third-party with the appropriate trust relationships. In the illustrative example of Figure 4, for ease of reference, the TSP server 404 is envisioned to be implemented as part of the transaction infrastructure 5, for example as part of the Mastercard MDES (Mastercard Digital Enablement Service) which is a single integrated platform for issuers, wallet providers, merchants, and other token requestors and handles the digitisation of Mastercard card types for a variety of digital payment methods.

The TSP server 404 is adapted to communicate with both the user device 401 and the merchant device 403. In particular, the TSP server 404 is adapted to communicate provisioning data to the user device 401, for example one or more credentials (tokens) 405 or portions thereof, each credential including at least a user-identifying portion 405a and a transaction-identifying portion 405b. The TSP server 404 is also adapted to communicate with the merchant device 403 (either directly, or indirectly via another transacting entity such as the acquirer 3) to receive transaction data for authentication purposes.

The system 400 further comprises one or more third-party servers or systems 407a, 407b that are adapted to communicate with the TSP server 404. For example, a CaaS (Cryptography as a Service) system 407a that is adapted to provide on-demand encryption / decryption services to the TSP server 404 for use in authentication of the transaction data. As another example, an official (e.g., government) system 407b that is adapted to inspect the transaction data that is received by the TSP server 404 for anti-money laundering purposes. The system also comprises one or more additional transaction entities, such as an issuer system 408 which is adapted to communicate with the TSP server 404 to receive the authenticated transaction data and approve the transaction, substantively as was described earlier in relation to Figures 2 and 3.

The TSP server 404 comprises one or more processors 409 and data storages 410a, 410b that are in operative communication with one another, and which together are adapted to provide credential derivation and management services. In the illustrative example, the TSP server 404 maintains a first database 410a which contains mappings of identifying information of cardholders with corresponding user-identifying portions 405a of credentials. In this example, the TSP server 404 also maintains a second database 410b which contains an index of the various transaction-identifying portions 405b of credentials that is has created in the past. Each entry in the index corresponds to a different combination of properties (parameters), whereby the specific combination of properties is intrinsic to a particular transaction. The combination of properties is encoded to derive the transaction-identifying portion 405b of the credential. One or more additional databases 410c may be provided that contain indices or lists of information 411 associated with one or more of the transaction properties, and which may be used by the processor(s) 409 to derive the transaction-identifying portion 406 based on a set of stored predefined rules.

Further details of the contents of these databases, and in particular how they are managed and used in order to derive and provision the credentials 405 to user devices 401, will now be provided with reference to the example credential 500 that is illustrated in **Figure 5****.** Credential 500 shown in this figure is one particular example of the credentials 405 that were discussed previously. As can be seen from Figure 5, the credential 500 comprises a user-identifying portion 501 and a transaction-identifying portion 502, which correspond to specific examples of the credential portions 405a, 405b respectively discussed in relation to Figure 4.

First considering the user-identifying portion 501, this corresponds to a unique reference number that is generated in association with personal identifying information of the user (cardholder / customer) for transaction purposes. In the illustrated example, the unique reference number generated corresponds to a Payment Account Reference (PAR), which is mapped to the user's Payment Account Number (PAN) 503 at the point when the PAN is initially digitised in respect of a particular user device 401 and a specific payment 'channel' (transaction interaction mechanism). As the skilled person will appreciate, the PAR is a (EMVCo standard) value that is used to link tokenised and PAN-based transactions without PAN as the linkage mechanism. When the payment card associated with that PAN is digitised for the first time, the PAR (and any associated tokens) will be mapped to the new PAN. It will therefore be appreciated that the credential 500 generated is not directly mapped to the PAN 503, and hence differs from 'tokens' in the 'traditional' sense (as described in relation to Figure 3) which are typically mapped directly to the user's PAN. The PAN-PAR mapping relationships that are generated upon digitisation of the user's PAN are maintained by the TSP server 404 in one of the data storages 410a, such that the underlying mapping from PAN via the PAR to the user-identifying portion 501 of the credential is retained.

Next, considering the transaction-identifying portion 502 of the credential, as noted previously, this contains an indication of various attributes, parameters and/or properties (or sets thereof) that are associated with aspects of the transaction. The majority (if not all) of these properties are intrinsic to the transaction and the processing that occurs during the transaction. In other words, the transaction-identifying portion 502 of the credential encodes information about the transaction within in. Figure 5 highlights certain properties that are envisioned to be encoded within (and associated with) the transaction-identifying portion 502 of the credential in a particular example. A first set of properties envisioned to be encoded within the transaction-identifying portion 502 relates to 'channelOwnership' information 504. This set of properties provides an indication of the entities that are involved in the transaction interaction; in other words, who 'owns' the 'channel' that is used for transaction processing. A second set of properties envisioned to be encoded within the transaction-identifying portion 502 relates to 'channelAttribute' information 505. This set of properties encompasses other parameters / properties of the transaction that are not directly tied to the transaction entities (and which have not been included in the first set of properties) - for example, properties of the credential itself, as well as properties relating to certain attributes of the interactions that take place during and after the transaction.

Advantages arise as a result of incorporating an indication of intrinsic properties of the transaction into the credential 500, particularly in relation to providing protection against a cross-channel contamination threat. Considered in more detail, such a threat would arise where one malicious user intercepts the PAN via one transaction 'channel' (e.g., a contactless interface between the contactless card or NFC Mobile, and the contactless POS terminal), and then attempts to reuse the intercepted PAN in an e-commerce transaction (over an internet connection), or vice-versa. In such a scenario, if the PAN itself is not used but rather the credential 500 specific to the channel (a PAN 'surrogate', which looks like a PAN but is just a mechanism for transmission from merchant terminal to acquirer), the PAN remains protected and also each channel remains distinct from the others. In other words, each credential 500 can only be used on one single transaction 'channel' (mechanism). Thus, the overall transaction ecosystem is protected by maintaining segregation of transaction 'channels' using the credential 500.

For any given transaction, the 'channelOwnership' set of properties 504 includes payment network information 506a, payment product information 506b and transaction entity information 506c. More specifically, the payment network information 506a includes information about the payment scheme network (e.g., Mastercard) that connects the transaction processing entities (e.g., the merchant 2 and the acquirer 3) with a designated third-party TSP server 404. This payment scheme network may correspond to the transaction scheme infrastructure 5 discussed earlier in relation to Figure 3. In other words, the payment scheme network may be considered to represent the digital marketplace 'owner', as it defines (to a certain extent) the participant issuing financial institutions and the payment products that will be used on the payment scheme network. The payment product information 506b includes information about the (card) payment product that will be used for the transaction, for example a Mastercard Digital Debit (MDD) which provides a user with access to online shopping and mobile contactless payments from their digital banking application. The transaction entity information 506c includes information about the financial institution that issued the payment product (e.g., the issuer 4), in combination with the digital 'wallet provider' of the digital wallet or application (also referred to as the 'credential requester') into which the payment card product is digitised, and the credential is provisioned.

The 'channelAttribute' set of properties 505 includes the following non-exhaustive, non-exclusive list of properties: cryptographic information 507; transaction interaction information 508; device security information 509; credential status information 510; and accessibility information 511.

In more detail, the cryptographic information 507 provides an indication of cryptographic material used during that particular type of transaction, and more specifically the cryptographic algorithm (e.g., AES, SE4 etc.) that will be used to encrypt the transaction data for subsequent authentication (e.g., the Issuer Discretionary Data IDD that forms part of the Issuer Authentication Data IAD). It is appreciated that the cryptographic algorithm used will likely differ based on jurisdiction, and the cryptographic information 507 therefore provides a straightforward mechanism for ascertaining the algorithm used based on the credential 500 alone. For the subsequent substantive transaction authentication, additional cryptographic material will be obtained from the IAD. This will be discussed in more detail subsequently.

The transaction interaction information 508 provides an indication of the type of device interaction that takes place during the transaction, and more specifically indicate the type of communication channel that will be established between the user device 401 (and its constituent digital application 402) and the merchant device 403. For example, contactless communications or remote digital communications etc.

The device security information 509 provides an indication of a security level or strength of the user device 401 (and its constituent digital application or wallet 402) that is being used to conduct the transaction. For example, if the digital application / wallet 402 requires certain CVM (Cardholder Verification Methods) to be performed, for example, on-device CVMs, such as fingerprint or face recognition, the associated security strength will be greater. The details of this information may be maintained by the TSP server 404 in one of the additional databases 410c.

The credential status information 510 provides an indication as to whether the credential is 'active'. This will be discussed in more detail subsequently. The accessibility information 511 provides an indication as to whether the encrypted transaction data generated can be accessed by certain trusted third parties. This information will therefore have a bearing on the retention policy that is used by the TSP server 404 in relation to the transaction data. For example, the accessibility information 511 may indicate whether 'keyEscrow' capability is enabled in relation to the transaction data, and therefore whether the transaction data can be accessed by government entities and/or for anti-money-laundering checks. This will be discussed in more detail subsequently.

For any given transaction interaction, the information included within the set of 'channelOwnership' properties 504 and the set of 'channelAttribute' properties 505 is encoded to derive the transaction-identifying portion 502 based on a set of predefined rules. These rules can be stored in one of the data storages 410c maintained by the TSP server 404, and retrieved as appropriate when deriving the credential 500 and provisioning the user device 401.

In an illustrative scenario where the credential 500 as a whole is composed of a certain number of digits X (more specifically, between 16 and 19 digits, to match the number of digits that would be used in a PAN), specific digits of the credential 500 can be assigned to encode specific aspects of the transaction-identifying portion 502. In compiling (deriving) the transaction-identifying portion 502 of the credential 500, the digits and values assigned thereto are combined and/or concatenated following the set of predefined rules.

For example, one digit may be used to indicate the payment network information 506a, whereby a certain number would be assigned to represent each payment scheme network. Additionally, several digits could be assigned to correspond to the BIN (Bank Identification Number) or IIN (Issuer Identification Number), which identifies the financial institution that issued the payment product and hence can be used to direct the transaction appropriately to / by the TSP server 404. Moreover, several digits could also be assigned to encode the transaction entity information 506c, for example, to indicate a specific index / entry in the database(s) 410c that store associations between the financial institution that issued the payment product and digital wallet providers (credential requestors).

Furthermore, in the above scenario, at least one digit of the credential 500 may be assigned to encode the interaction information 508 and certain numbers may be mapped to specific interaction types. At least one digit of the credential 500 may also be assigned to encode the device security information 509, for example to indicate a specific index / entry in a table or database (such as one of the databases 410c maintained by the TSP server 404) of device security levels. The remaining digits of the credential 500 may be assigned to encode the cryptographic information 507, the credential status information 510 and the accessibility information 511. Additional details regarding the encoding of this information are discussed subsequently.

Based on the discussion above, it will be appreciated that any given transaction-identifying portion 502 can potentially be used to derive credentials 500 for a plurality of different users since there may be multiple users conducting transactions having the same specific set of intrinsic properties. However, each credential 500 that is provisioned into a given user's digital wallet or application 402 is nevertheless uniquely associated with that user because of the presence of the user-identifying portion 501. Furthermore, the specific combination of transaction-identifying portion 502 and user-identifying portion 501 will only be used for one credential. It will therefore be appreciated that any given user may have multiple different unique credentials 500 provisioned into their digital wallet that they can make use of depending on the specific transaction interaction taking place.

For example, a first credential "[PAR + ApplePay + remote digital / Internet]" may be assigned or allocated for a first specific transaction type whilst a second credential "[PAR + ApplePay + contactless]" may be assigned for a second specific type of transaction. It will therefore be appreciated that although the same PAR is used, the specific other combinations of transaction properties will result in the generation / allocation of different credential. Furthermore, if the first and/or second credentials utilise one specific type of cryptographic material (e.g., the {AES, SHA-256, ECC-DSA} suite of algorithms), then if different cryptographic material were to be desired (e.g., the {SM4, SM3, SM2} suite of algorithms), third and/or fourth credentials would need to be assigned or allocated, since the cryptographic information 507 would differ and hence the transaction-identifying portion 502 would differ.

The above-described credentials have many advantages over 'traditional' tokenisation practices. For example, the use of the credentials described herein removes reliance upon 'token vaults' because the credential contains the required information inside for validation and authentication of the transaction by the TSP server and the issuer, without needing to map the credential to the PAN. Additionally, including the transaction-identifying portion 502 in the credential allows the merchant 2 or acquirer 3 to route the payment transaction associated with that credential through the correct channel and / or to the correct entry point of a processing pipeline (e.g., at the TSP server 404) such that the appropriate processing of the transaction data can be easily performed. Moreover, all this additional functionality is provided using a piece of information (a credential) that would otherwise still need to be transmitted as a standard during the transaction anyway - but rather as a traditional 'token' (e.g., an ISO-8583 token), which would not have the additional advantages associated with the credentials 500 described herein.

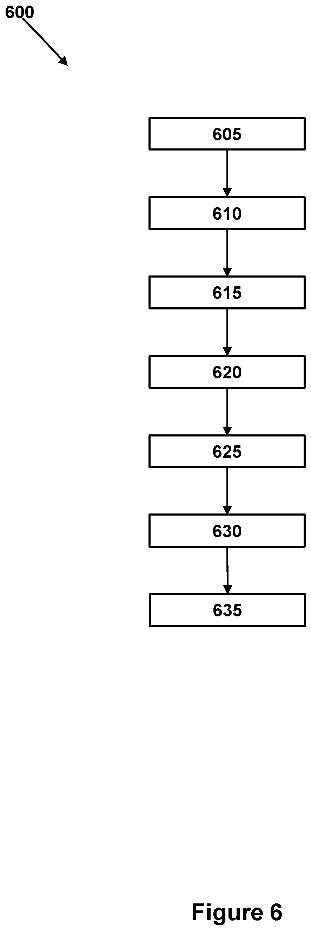

A description of an example processing workflow that would be used by the TSP server 404 to derive, assign and provision the credential 500 to the user device 401 will now be provided with reference to **Figure 6****.**

The method 600 described in Figure 6 begins in Step 605 with a first instance of digitisation of the user's PAN to generate the unique reference number PAR. The PAN-PAR mapping created in this step is then stored as an entry in a database (e.g., in data storage 410a) that is maintained by the TSP server 404. The mapped PAR can be retrieved by the TSP server 404 and allocated to form the user-identifying portion 501 during all subsequent credential derivation processes, where a new credential is being derived in association with a new `type' of transaction, but in relation to the same PAR (and PAN).

The method 600 then continues in Steps 610 to 620, during which the TSP server 404 retrieves, allocates or otherwise derives the transaction-identifying portion 502 of the credential 500. To do this, the TSP server 404 ascertains in Step 610 the intrinsic properties of the transaction for which the credential 500 is desired to be used. The TSP server 404 then assigns, allocates and/or encodes in Steps 615 and 620 these properties appropriately into the transaction-identifying portion 502 of the credential based on the predefined rules. More specifically, in Steps 615 and 620 respectively the set of 'channelOwnership' properties 504 and the set of 'channelAttribute' properties 505 are ascertained, and encoded into specific digits of the transaction-identifying portion 502 of the credential.

Considering Step 610 in more detail, the TSP server 404 would ascertain at least the payment network information 506a, the payment product information 506b, and the transaction entity information 506c corresponding to the transaction. The TSP server 404 would also ascertain the interaction information 508, the device security information 509, the cryptographic information 507, the credential status information 510 and the accessibility information 511 corresponding to the transaction.

Considering Step 615 in more detail and using the predefined rules, the TSP server 404 would then assign or encode a first digit (or set of digits) of the transaction-identifying portion 502 based on the numeric value associated with the payment scheme network. Additionally, the TSP server 404 would assign or encode a second set of digits of the transaction-identifying portion 502 based on a numeric value associated with the payment product. As a specific example, the numeric value in question may correspond to all or part of the BIN associated with the (card) payment product. The TSP server 404 would also assign or encode a third set of digits of the transaction-identifying portion 502 based on a numeric value associated with the transaction entities. As a specific example, the TSP server 404 may access the database(s) 410c that store an index of pairs of issuing financial institutions and credential requestors (wallet providers) to retrieve the index of the corresponding pair of entities that are associated with the transaction. The numeric value in question assigned / encoded in the third set of digits may therefore correspond to the retrieved index.

Considering Step 620 and using the predefined rules, the TSP server 404 would assign or encode a fourth digit (or set of digits) of the transaction-identifying portion 502 based on the numeric value associated with the type of interaction as indicated by the interaction information 508; and would assign or encode a fifth set of digits of the transaction-identifying portion 502 based on the numeric value associated with the level of security of the user device 401. As a specific example, to perform the above processing, the TSP server 404 may access a list of stored numeric values corresponding to interaction types, and an index of device strengths / security levels, and retrieve the appropriate values to encode in the fourth and fifth (sets of) digits of the transaction-identifying portion 502. The stored indices and lists may be retrieved from the database(s) 410c.

Once values have been ascertained for encoding all of the digits of the transaction-identifying portion 502, the credential is derived or compiled by combining and/or concatenating the respective digits according to the predefined set of rules.

Although Steps 610 to 620 have been described as separate and sequential processing steps, the order in which they are performed may be reversed; and/or they may be performed in parallel.

Additionally, it is noted that because there are a large (but potentially finite) number of combinations of intrinsic transaction properties, a correspondingly large but finite number of transaction-identifying portions 502 can be assigned, encoded or derived. In view of this, the TSP server 404 can populate and maintain a list (e.g., in database 410b) of all possible combinations of intrinsic transaction properties, and the corresponding transaction-identifying portions 502. Thereafter, as an alternative to the processing described above for Steps 615 and 620, the TSP server 404 may simply determine if the specific combination of intrinsic transaction properties has previously been assigned to a transaction-identifying portion 502. If so, the TSP server 404 can retrieve the appropriate transaction-identifying portion 502 from the stored list, rather than re-deriving the transaction-identifying portion 502 again using the predefined set of rules.

Thereafter, the method 600 proceeds with a final allocation in Step 625 of the credential 500 to the transaction, where the TSP server 404 combines the user-identifying portion 501 and the transaction-identifying portion 502 together to form the overall credential 500. The TSP server 404 then initiates a provisioning communication in Step 630 with the user device 401, wherein the credential 500 is transmitted to the user device 401 and provisioned into the digital wallet or digital application 402 that will be involved in the transaction process. This credential provisioning process would take place prior to any transaction being carried out by the user device 401. The credential provisioning process may also take place at the same time as, and/or encompass the functionality of, the provisioning of cryptographic material into the user device 401 that will be used subsequently during transaction processing.

Finally, the credential 500 is stored in Step 635: by the user device 401 in the appropriate storage location within the digital wallet or digital application 402; and/or by the TSP server 404 in an appropriate database (not shown).

As the skilled person will appreciate, the above-described method 600 may be carried out by the TSP server 404 in respect of a plurality of different credentials 500, each credential 500 being associated with the specific form or type of transaction that is envisioned to be enacted by the user device 401, and in relation to each digital application or digital wallet 402 installed on the user device 401.

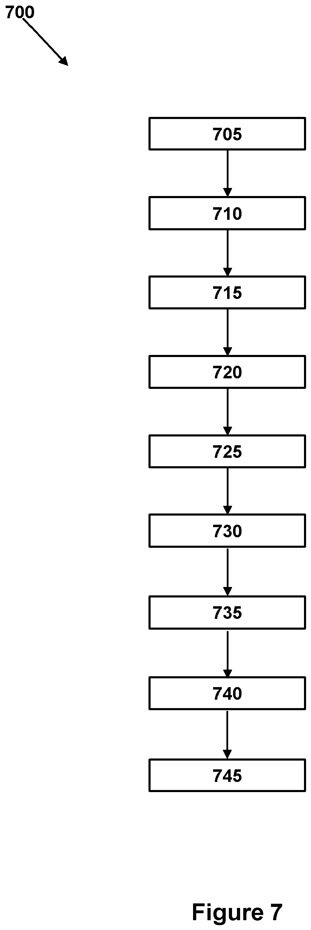

A description of an example processing workflow 700 that would be implemented by the user device 401 to process a transaction with the merchant device 403 using the credential 500 will now be provided with reference to **Figure 7****.**

The method 700 begins in Step 705 with the initiation of a transaction interaction between the user device 401 and the merchant device 402, and more specifically with an exchange of communications and data between the two devices to generate transaction data. At least some portion of the generated transaction data corresponds to encrypted authentication data that will be used during transaction authentication processing that will be performed subsequently by the TSP server 404. This transaction interaction may take the form of any one of number of different types of interactions - e.g., contactless transactions, remote (digital) transactions - and may or may not be governed by one or more standards (such as the EMVCo standard). Additionally, subsequent references to certain processing steps being carried out by the user device 401 should be understood to also refer to the digital application or digital wallet 402, that is installed on the mobile device 401 and managing the transaction interactions.

At the appropriate point in the transaction processing that takes place between the user device 401 and the merchant device 403, the user device 401 retrieves, in Step 710, the credential 500 corresponding to the properties of the transaction that is being carried out.

Additionally, when generating the transaction data that is to be transmitted to the merchant device 403, the user device 401 is arranged, in Step 715, to include certain pieces of information within the generated transaction data, whereby the pieces of information correspond to information that has also previously been encoded within the credential 500. More specifically, aspects of the transaction entity information 506c, the device security information 509 and the credential status information 510 are envisaged to be incorporated into the generated transaction data. Such information can be used subsequently by the TSP server 404 during downstream transaction processing and authentication. At least some of the credential information is incorporated into the encrypted authentication data, whilst the other credential information is incorporated in 'cleartext' (unencrypted form) into the transaction data. In one specific example, the device security information 509 and the credential status information 510 are included in the encrypted authentication data, whilst the transaction entity information 506c is included in the unencrypted data.

Thereafter, the transaction data and the associated credential 500 are transmitted, in Step 720, from the user device 401 to the merchant device 403. The merchant device 403 then routes, in Step 725, the received transaction data and corresponding credential 500 to the TSP server 404 (optionally via an intermediary entity, such as acquirer 3) as part of an authentication request. As part of Step 725, the merchant device 403 (or the acquirer 3, if applicable) may determine, using the information in the credential 500, the appropriate `channel' to be used for routing the transaction data to the TSP server 404 for downstream transaction processing. This determination may be based upon the payment product information 506b encoded within the credential 500, particularly if the credential digits encoding the payment product information 506b correspond to the BIN of the payment product used for the transaction. The transaction data would then be transmitted to the TSP server 404 via the channel in accordance with existing transaction processing methods.

Thereafter, once the transaction data and the credential 500 have been received, the TSP server 404 will determine, at Step 730, appropriate cryptographic material and/or algorithms that are to be used to decode the encrypted authentication data. More specifically, this determination is carried out using the transaction entity information 506c (also present in the credential 500) that has been incorporated into the transaction data.

This information is accessible to the TSP server 404 since it is included in the unencrypted portion of the transaction data.

The TSP server 404 then derives, in Step 735, the appropriate cryptographic material that corresponds to the transaction entity information 506c (e.g., the appropriate cryptographic master key that is to be used for the key derivation / selection process when processing the transaction cryptogram). This derivation may be carried out using additional key identifier information that is included in the transaction data (but not included in the credential 500).

Subsequently, the TSP server 404 carries out, in Step 740, the appropriate processing of the transaction data, and more particularly of the encrypted authentication data comprised therein, in order to authenticate the transaction. An authentication response message is returned, in Step 745, to the merchant device 403, and therefrom to the user device 401, confirming the authentication result.

A specific illustrative example of the method 700 will now be described with reference to a transaction interaction that is implemented following the EMVCo standard. As part of the processing in Steps 705 and 715, the user device 401 is configured to, in response to receiving a *'GPO Command'* or a *`GenerateAC command',* generate the application cryptogram (AC) as well as the Issuer Authentication Data (IAD). As the skilled person would be aware, the IAD comprises proprietary application data for transmission to the issuer 4 (or to an entity that is performing the appropriate processing on behalf of the issuer 4). In the current example, this would correspond to the TSP server 404. More specifically, the IAD contains the encrypted Issuer Discretionary Data (IDD). Following EMVCo standards, the IDD comprises an encrypted form of the user's PAN - E1[k][PAN] - generated using (for example) Symmetric Key Block Encryption. With reference to Figure 5 above, it is noted that an indication of the cryptographic material (and specifically the cryptographic algorithm) that is used to generate the encrypted IDD is contained within the transaction-identifying portion of the credential 500, and specifically within the cryptographic information 507 aspect encoded therein.

An example form of the IAD that is generated by the user device 401 is set out in Table A below. The key identifier information referred to above in relation to Step 735 may correspond to the 'Derivation Key Index' shown in Table A. As noted in relation to Step 715, there is also correspondence between certain portions of the credential 500 and the IAD. This correspondence is illustrated in Table B, which also additionally indicates which pieces of information in the IAD are encrypted.

**Table A: Example of contents of the Issuer Application Data (IAD)**

| Byte(s) | Contents | Description |
|---|---|---|
| 1 | Length Indicator | Length of EMVCo-defined data in IAD. Set of '0F'. |
| 2 | CCI | Common Core Identifier |
| 3 | DKI | Derivation Key Index |
| 4-8 | CVR | Card Verification Results |
| 9-16 | Counters | Contents are at the discretion of the merchant |
| 17 | Length Indicator | Length of IDD field in IAD. Set to '0F'. |
| 18-32 | IDD | Contents are at the discretion of the issuer |

**Table 8: Indication of IAD components and correspondence to credential components**

| Encrypted (Y/N) | Byte | B1 | | B2 | B3 | B4 | B5 | B6 | B7 | B8 |
|---|---|---|---|---|---|---|---|---|---|---|
| N | 1 | indexOwnershtpTable - part 1 (8 bits), most significant bits. | | | | | | | | |
| N | 2 | indexOwnershipTable - part 2 (3 bits), less significant bits. | | | | RFU | RFU | RFU | RFU | RFU |
| Y | 3 | VN -- Version Number of the IDD encoding | | | | | | | | |
| | | | • VN = "0x06" for any OEM security evaluated by Mastercard that pertain to the method presented in this patent | | | | | | | |
| | | | • All other values RFU | | | | | | | |
| | 4 | channelTokenStatus 1 bit (MSB) | | PAN (7 bits) -- most significant bits | | | | | | |
| | 5 | PAN (56 bits) - 7 bytes with less significant bits at the end. | | | | | | | | |
| | 6 | Uses Luhn digit for PAN value check | | | | | | | | |
| | 7 | | | | | | | | | |
| | 8 | | | | | | | | | |
| | 9 | | | | | | | | | |
| | 10 | | | | | | | | | |
| | 11 | | | | | | | | | |
| Y | 12 | PSN 4bits | | | | | MSB of PAR (4 most significant bits) | | | |
| Y | 13 | Partial Expiration Date (7 bits) | | | | | | | | RFU (1 bit) |
| Y | 14 | indexStrength = indexSecurityScoreTable - part 1 (8 bits) | | | | | | | | |
| Y | 15 | indexSecurityScoreTable - part 2 (3 bits) | | | | | channelTokenStatus (next 5 bits) | | | |
| Y | 16 | MSB of PAR (8 most significant bits following the 4 bits of PAR above) | | | | | | | | |
| Y | 17 | PAR lower bits-Part 1 (8 less to the lower significant bits) | | | | | | | | |
| Y | 18 | PAR lower bits-Part 1 (8 less to the lower significant bits) | | | | | | | | |

The information referred to in Table B as the 'indexOwnershipTable' corresponds to the transaction entity information 506c, and more specifically to an index in the database of pairs of issuing financial institutions and credential requestors (wallet providers). As shown in Table B, this information is included in the non-encrypted portion of the IAD. For example, with reference to Table A, the transaction entity information 506c may be included in the 'Counter' section of the IAD (e.g., in Bytes 9 to 16).

Additionally, the information referred to in Table B as the 'channelTokenStatus' corresponds to the credential status information 510, whilst the information referred to as the 'indexSecurityScoreTable' corresponds to the device security information 509. As shown in Table B, this information is included in the encrypted portion of the IAD, and specifically (with reference to Table A), in the IDD section (e.g., in Bytes 19 to 32). In other words, this information is encrypted using the cryptographic algorithm that is indicated by the cryptographic information 507 encoded within the credential 500. This information is therefore accessible to the TSP server 404 for use during the transaction authentication processing that occurs during Step 740, once the cryptographic material has been determined and applied.

Returning now to a discussion of the credential status information 509 and the accessibility information 510. As can be seen from Table B, the status of the credential 500 corresponds to a supplementary attribute that would not necessarily be available in plaintext (unencrypted) to an external observer, but would be accessible only after decryption of the IDD has taken place.

The credential status information 509 encodes which one of a plurality of possible states the credential 500 has been assigned, selected from the following (non-exhaustive) list: 'Active'; 'Inactive'; 'Suspended'; or 'Deactivated'. These states, and the transitions between states, are illustrated below in the Algorithmic State Machine (ASM) Chart A.

The specific details of how the credential status is updated and commuted between different states are not central to the discussions set out here, and therefore only a few points will be presented now. In relation to the use of the 'Deactivated' state, the credential 500 may be commuted to this state in the event of a (major) security breach occurring in relation to the transaction 'channel' to which the credential 500 is allocated.

For example, compromission of a certain type of Operating System (OS) in a specified type of user device 401 and for a particular type of transaction interaction. This would prevent the credential 500 from being accepted under potentially fraudulent conditions, and would indicate that the associated transaction may have been exposed to fraudulent activity.

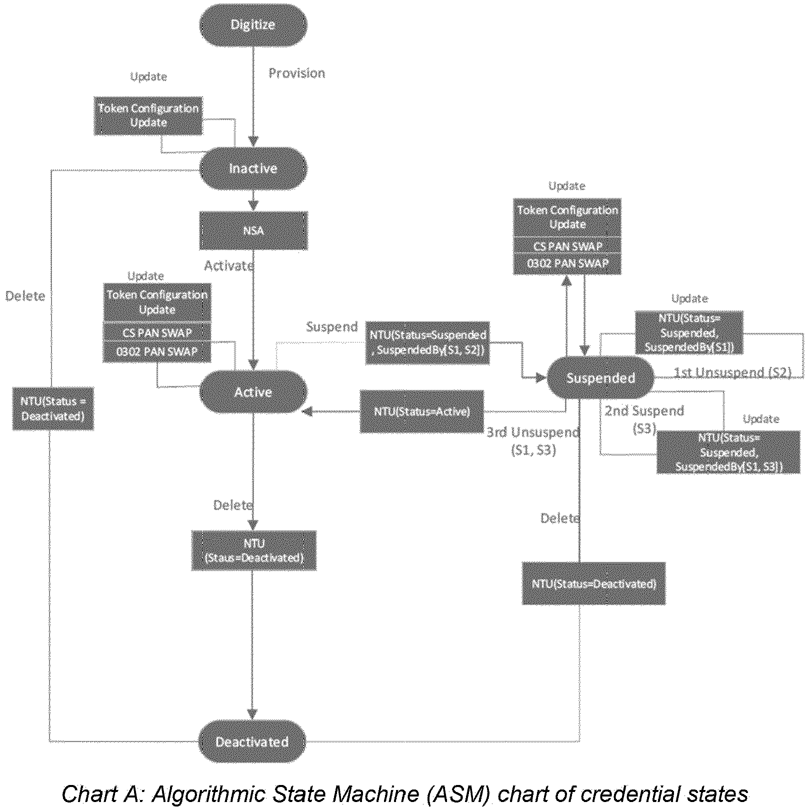

Now considering the accessibility information 510, as noted previously, this is used to indicate whether 'keyEscrow' functionality - i.e., whether keys needed to decrypt data are held 'in escrow' so that under certain circumstances they can be accessed by an authorised third-party- is associated with encrypted authentication data. In other words, this functionality indicates whether the transaction authentication data, and specifically the encrypted PAN, is accessible by a third-party server 407b. More specifically, the accessibility information 510 corresponds to a 'switch' in the `ChannelAttributes' 504 information that when it is on will include a token computed using a Field-Preserving Encryption (FPE) algorithm E2 applied with a pair [Tweak, K_{FPE}] on the PAN. The parameters required to generate the token would be known to the TSP server 404, and would be encrypted along with the token itself as a digital envelope with perfect forward secrecy that is then transmitted along with the transaction data. The encrypted token is also included within the encrypted IDD, in the form of E1[k]{E2[Tweak, K_{FPE}]token}. Further details of how this encryption is handled are the subject of a different application by the Applicant (EP 23195829, the contents of which are incorporated herein to the extent applicable under relevant national law) and will not be discussed further here.

Considered another way, the accessibility information 510 indicates that the encrypted PAN is to be made accessible to the third-party server 407b as a result of the generation of an additional set of encrypted data, whereby the encrypted PAN in the IDD is first encrypted in a specific way using an FPE algorithm; and whereby the FPE-encrypted PAN is also encrypted within a digital envelope, along with parameters that were used for the FPE encryption, for access by the third-party server 407b. This functionality would be suitable for use in the situation where a government agency needs access to the PAN - specifically, for Anti-Money Laundering (AML) enforcement.

Based on the above discussions, it will be appreciated that the credential 500 described herein can provide supplementary information and functionality in relation to indicating certain (supplemental) properties of the transaction (e.g., keyEscrow functionality is used, and/or whether the credential is active and the potential ramifications for the transaction itself). The credential 500 is therefore more flexible, and includes more information, as compared with a 'traditional token' used to represent the user's PAN during typical tokenised transactions. The credential 500 nevertheless maintains the security of the PAN, but remains associated therewith, providing user-identifying information. Moreover, the credential 500 provides further benefits in relation to preventing / mitigating cross-channel contamination (and the fraudulent activity arising therefrom), which benefits are not envisaged in relation to the use of 'traditional tokens'.

As the skilled person will appreciate, the embodiments described above are exemplary, and further embodiments falling within the spirit and scope of the disclosure may be developed by the skilled person working from the principles and examples set out above.

## Claims

1. A method of provisioning a credential for a transaction between a payment device of a user and a transaction processing device, the method being implemented by a remote third-party server and comprising:
assigning the credential to the transaction and the user by:
determining unique identifying information of the user;
allocating a first user-identifying portion of the credential to correspond to the unique identifying information;
determining a plurality of properties intrinsic to the transaction and encoding the plurality of properties into transaction-identifying information; and
allocating a second transaction-identifying portion of the credential to correspond to the transaction-identifying information; and
provisioning the credential into the payment device for subsequent retrieval and association with encrypted authentication data generated by the payment device during the transaction.

2. The method of claim 1, wherein the unique identifying information of the user corresponds to a Payment Account Reference PAR that has been mapped to a Primary Account Number PAN used for the transaction.

3. The method of claim 1 or claim 2, wherein the plurality of properties comprises a first property indicative of cryptographic material used, by the remote third-party server, during a subsequent transaction authentication of the encrypted authentication data.

4. The method of claim 3, wherein the first property comprises identifying information indicative of a requestor of the credential and a transaction entity associated with issuance of a payment product used during the transaction.

5. The method of claim 3 or 4, wherein the first property comprises an indication of a cryptographic algorithm used by the payment device during the transaction to generate the encrypted authentication data.

6. The method of any preceding claim, wherein the plurality of properties comprises a second property indicative of a processing mechanism used by the remote third-party server to process the authentication data.

7. The method of any preceding claim, wherein the plurality of properties comprises at least one third property comprising an indication of one or more of the following: a status of the credential; a transaction type; accessibility to the transaction data by an external entity; and a security level of the payment device.

8. A method of conducting a transaction between a payment device of a user and a transaction processing device, the method comprising:
generating, by the payment device, transaction data comprising encrypted authentication data for use in a subsequent transaction authentication by a remote third-party server;
determining, by the payment device, (i) a plurality of properties intrinsic to the transaction and (ii) unique identifying information of the user;
retrieving, by the payment device, a credential assigned to the transaction, the credential encoding a first user-identifying portion corresponding to the unique identifying information and a second transaction-identifying portion corresponding to the determined plurality of properties; and
transmitting, by the payment device and via the transaction processing device, the transaction data and the credential to the remote third-party server for the transaction authentication.

9. The method of claim 8, wherein the plurality of properties comprises a first property indicative of cryptographic material used, by the remote third-party server, during the transaction authentication.

10. The method of claim 9, wherein the transaction data further comprises unencrypted data including information indicative of the first property.

11. The method of any of claims 8 to 10, wherein the plurality of properties comprises a second property indicative of a mechanism used by the remote third-party server to process the authentication data during the transaction authentication.

12. The method of any of claims 8 to 11, wherein generating the encrypted authentication data comprises encrypting information indicative of at least one of the plurality of properties intrinsic to the transaction.

13. The method of claim 12, wherein the at least one of the plurality of properties corresponds to a status of the credential and/or a security level of the payment device.

14. A system for provisioning a credential for a transaction between a payment device of a user and a transaction processing device, the system comprising one or more processors collectively configured to:
assign the credential to the transaction and the user by:
determining unique identifying information of the user;
allocating a first user-identifying portion of the credential to correspond to the unique identifying information;
determining a plurality of properties intrinsic to the transaction and encoding the plurality of properties into transaction-identifying information; and
allocating a second transaction-identifying portion of the credential to correspond to the transaction-identifying information; and
provision the credential into the payment device for subsequent retrieval and association with encrypted authentication data generated by the payment device during the transaction.

15. A payment device for conducting a transaction between a user and a transaction processing device, the payment device comprising one or more processors collectively configured to:
generate transaction data comprising encrypted authentication data for use in a subsequent transaction authentication by a remote third-party server;
determine (i) a plurality of properties intrinsic to the transaction and (ii) unique identifying information of the user;
retrieve a credential assigned to the transaction, the credential encoding a first user-identifying portion corresponding to the unique identifying information and a second transaction-identifying portion corresponding to the determined plurality of properties; and
transmit, via the transaction processing device, the transaction data and the credential to the remote third-party server for the transaction authentication.
